# EUROPEAN PATENT APPLICATION

(11) **EP 2 899 790 A1**
(43) Date of publication of application: **29.07.2015**
(21) Application number: 13812583.6
(22) Date of filing: 03.07.2013
(51) Int. Cl.: H01M 10/04, H01M 10/058, H01M 2/26

(54) **ELECTRODE ASSEMBLY, BATTERY COMPRISING SAME, AND METHOD FOR MANUFACTURING SAME**

(30) Priority: 06.07.2012 KR 20120074229
(71) Applicant: Orange Power Ltd., Daejeon 305-500 (KR)
(72) Inventor: HONG, Young Jin, Cheonan-si Chungcheongnam-do 331-746 (KR); KIM, Chul Hwan, Daejeon 302-765 (KR)
(74) Representative: Wallinger, Michael
(86) International application number: PCT/KR2013/005878
(87) International publication number: WO 2014/007527

(57) **Abstract**

An electrode assembly, a battery including the same, and a method of manufacturing the battery. The electrode assembly includes an electric insulation layer comprising a base unit having a first main surface and a second main surface opposite to the first main surface; a first electrode formed on the first main surface of the electric insulation layer; a first lead electrically connected to the first electrode and extending out of the electric insulation layer; a second electrode formed on the second main surface of the electric insulation layer and having different polarity from that of the first electrode; a second lead electrically connected to the second electrode and extending in a direction opposite from the extending direction of the first lead; and a separator arranged on at least one of the first electrode and the second electrode, wherein the electric insulation layer comprises a first anti-leakage unit formed along at least a portion of edges of the first main surface of the base unit and a second anti-leakage unit formed along at least a portion of edges of the second main surface of the base unit, and wherein the electric insulation layer is wound at least once around a winding axis parallel to the extending directions of the first lead and the second lead.

## Description

### BACKGROUND OF THE INVENTION

### 1. Field of the Invention

The present invention relates to battery-related technique, and more particularly, to electrode assembly, battery including the same, and method of fabricating the same.

### 2. Description of the Related Art

Active researches are being made in battery industry based on expansion of industry related to portable electronic devices due to recent developments in semiconductor fabricating technologies and communication technologies and demands for developing alternative energies based on environment preservation and depletion of natural resources. As the representative example of battery, a lithium primary battery features relatively high voltage and high energy density as compared to conventional aqueous solution based batteries, and thus a lithium primary battery may be easily miniaturized and lightweighted. Such a lithium primary battery is used for various purposes, such as the main power supply for a portable electronic device and a backup power supply.

A secondary battery is a battery that is fabricated by using electrode materials with excellent reversibility and may be charged and discharged. The secondary battery may be categorized as cylindrical secondary battery and rectangular secondary battery based on the shape of it and may be categorized into nickel-hydrogen (Ni-MH) battery, lithium (Li) battery, lithium-ion (Li-ion) battery, etc., based on materials constituting a positive electrode and a negative electrode. Application of such a secondary battery is gradually expanding from small batteries for mobile phones, laptop PCs, and portable display devices to mid-size or large batteries, such as a battery for an electric motor vehicle and a battery used in a hybrid vehicle. Therefore, a secondary battery is demanded not only to be lightweighted, exhibit high energy density, excellent charging/discharging speed, charging/discharging efficiencies, and cyclic characteristics, but also to exhibit high stability and economic feasibility.

### SUMMARY OF THE INVENTION

Embodiments of the present invention includes an electrode assembly for battery, which exhibits high energy density, charging/discharging speed, charging/discharging efficiencies, and cyclic characteristics and may further easily be deformed, capacity-adjusted, and wound.

Embodiments of the present invention also include batteries, which include electrode assemblies having the above-stated advantages, may be easily connected to one another in series or in parallel, and exhibit excellent cooling efficiency.

Embodiments of the present invention also include methods of manufacturing batteries having the above-stated advantages.

According to an aspect of the present invention, there is provided an electrode assembly including an electric insulation layer comprising a base unit having a first main surface and a second main surface opposite to the first main surface; a first electrode formed on the first main surface of the electric insulation layer; a first lead electrically connected to the first electrode and extending out of the electric insulation layer; a second electrode formed on the second main surface of the electric insulation layer and having different polarity from that of the first electrode; a second lead electrically connected to the second electrode and extending in a direction opposite from the extending direction of the first lead; and a separator arranged on at least one of the first electrode and the second electrode.

The electric insulation layer may include a first anti-leakage unit formed along an edge of the first main surface of the base unit to have a relatively large thickness; and a second anti-leakage unit formed along an edge of the second main surface of the base unit to have a relatively large thickness. The first anti-leakage unit may be formed outside the first electrode and the first lead.

The first electrode may include a first current collecting layer formed on the first main surface; and a first active material layer formed on the first current collecting layer. The first lead may be directly connected to the first current collecting layer. The first lead may be integrated with the first current collecting layer. The second anti-leakage unit may be formed outside the second electrode and the second lead.

The second electrode may include a second current collecting layer formed on the second main surface; and a second active material layer formed on the second current collecting layer. The second lead may be directly connected to the second current collecting layer. The second lead may be integrated with the second current collecting layer.

The first lead and the second lead may extend out of the separator. The electric insulation layer may include a natural or synthetic flexible resin-based material.

The electrode assembly may be wound, such that the electric insulation layer forms the innermost layer, the intermediate layer, and the outermost layer. The plurality of first leads may be arranged and electrically connected to one another, whereas the plurality of second leads may be arranged and electrically connected to one another.

According to another aspect of the present invention, there is provided a battery including the above-stated electrode assembly; a roll core arranged at an end portion of the electric insulation layer in a direction parallel to the winding axis; and a case for accommodating the electrode assembly and the roll core.

The roll core may have a hollow cylindrical or rectangular shape.

Insulating coating layers may be formed on surfaces of the roll core and the case, the surfaces not contacting the electrode assembly.

The battery may further include a first terminal unit arranged at first end portions of the roll core and the case and electrically connected to the first lead. The first terminal unit may include a first cover covering the roll core and the case; a protrusion extending outward from the first cover; and a first terminal attached to the first cover and the protrusion and electrically connected to the first lead.

The battery may further include a second terminal unit arranged at second end portions of the roll core and the case and electrically connected to the second lead. The second terminal unit may include a second cover covering the roll core and the case; a protrusion extending outward from the second cover; and a second terminal attached to the second cover and the protrusion and electrically connected to the second lead.

The battery may further include a first terminal unit arranged at first end portions of the roll core and the case and electrically connected to the first lead; and a second terminal unit arranged at second end portions of the roll core and the case and electrically connected to the second lead, wherein the first terminal unit and the second terminal unit may be inserted and coupled to each other and decoupled from each other.

A voltage sensing unit may be coupled to at least one of the first and second terminal units. A temperature sensing unit may be coupled to at least one of the first and second terminal units.

According to another aspect of the present invention, there is provided a method of fabricating a battery, the method including forming an electrode assembly including an electric insulation layer including a base unit having a first main surface and a second main surface opposite to the first main surface; a first electrode formed on the first main surface of the electric insulation layer; a first lead electrically connected to the first electrode and extending out of the electric insulation layer; a second electrode formed on the second main surface of the electric insulation layer and having different polarity from that of the first electrode; a second lead electrically connected to the second electrode and extending in a direction opposite from the extending direction of the first lead; and a separator arranged on at least one of the first electrode and the second electrode; winding the electrode assembly around a roll core as a winding axis to have a roll structure, such that the first electrode and the second electrode face each other across the separator and form an electrochemical reacting area; and coupling the electrode assembly wound around the roll core to a case.

### The Effect of the INVENTION

According to an embodiment of the present invention, since an electrode assembly is provided as a single structure including electrodes having difference polarities and arranged respectively on a first main surface and a second main surface of an electric insulation layer, an electrochemical reacting area may be formed by simply winding the electrode assembly, such that the first electrode and the second electrode face each other via the separator.

Furthermore, according to an embodiment of present invention, since an electric insulation layer, which is thin and flexible unlike a metal, may act as a supporting unit, a metal current collecting layer, of which workability is deteriorated as thickness thereof increases, may be formed as a thin-film, thereby reducing the overall volume of an electrode assembly. As a result, energy density of a battery may be enhanced. Furthermore, since a roll core functions as a winding axis, workability may be improved during formation of an electrode assembly into a roll structure.

Furthermore, according to an embodiment of the present invention, a plurality of leads may be formed at at least one of first and second electrodes embodied as rolls, thereby shortening current paths and reducing internal resistance of a battery. As a result, charging/discharging rate and efficiency and cycle characteristics of the battery may be improved.

Furthermore, in a battery according to an embodiment of the present invention, an air-cooling coolant or a liquid-cooling coolant may flow through a roll core having a hollow pipe-like shape, and thus a battery with improved cooling efficiency or heat dissipating efficiency may be provided. Furthermore, such a roll core functions as a center supporting unit or a center structure when a plurality of batteries are connected to one another and constitute a module or a pack, thereby improving mechanical strength of the batteries.

Furthermore, in a battery according to an embodiment of the present invention, a first terminal unit and a second terminal unit are formed to have shapes to be coupled to and/or decoupled from each other, and thus a plurality of batteries may be easily connected in series or in parallel.

Furthermore, in a battery according to an embodiment of the present invention, a voltage sensing unit and/or a cell voltage sensing connector unit is/are coupled to one of first and second terminal units, and thus the battery may be easily connected to a battery monitoring system.

Furthermore, according to an embodiment of the present invention, structure of an electrode assembly may be simplified, a thin and flexible electric insulation layer may become a supporting unit, reduce thickness of a metal current collecting layer, and help winding of a roll core. Therefore, a method of fabricating an electrode assembly that may be easily wound for packaging a battery and may be easily deformed and capacity-adjusted may be provided.

### BRIEF DESCRIPTION OF THE DRAWINGS

Hereinafter, embodiments of the present invention will be described in greater detail with reference to the accompanying drawings.
FIG. 1 is a sectional view of an electrode assembly according to an embodiment of the present invention;
FIGS. 2A and 2B are a plan view and a bottom view of the electrode assembly of FIG.1, viewed from above IIA and below IIB, respectively, where the arrow A indicates the same winding axis direction as that of FIG. 1;
FIGS. 3A and 3B are sectional diagrams showing a roll structure formed by winding an electrode assembly around the winding axis direction A according to an embodiment of the present invention, where FIG. 3B is a magnified sectional diagram showing a section obtained along a line IIIA-IIIB of FIG. 3A;
FIG. 4 is a sectional diagram showing that an electrode assembly and a roll core are attached to a case according to an embodiment of the present invention;
FIG. 5 is a diagram showing a plan view VA of a first terminal unit provided at a side of a battery including a roll structure according to an embodiment and a magnified sectional view VB thereof obtained along a line VB-VB';
FIG. 6 is a diagram showing a plan view VIA of a second terminal unit provided at another side of a battery including a roll structure and a magnified sectional view VIB thereof obtained along a line VIB-VIB' according to an embodiment of the present invention;
FIG. 7A is a sectional view of a battery according to an embodiment of the present invention, and FIG. 7B is a perspective view of the battery; and
FIG. 8 is a sectional view showing a configuration in which a plurality of batteries are connected in series.

### DETAILED DESCRIPTION OF THE INVENTION

The present invention will now be described more fully with reference to the accompanying drawings, in which exemplary embodiments of the invention are shown.

The invention may, however, be embodied in many different forms and should not be construed as being limited to the embodiments set forth herein; rather these embodiments are provided so that this disclosure will be thorough and complete, and will fully convey the concept of the invention to one of ordinary skill in the art. Meanwhile, the terminology used herein is for the purpose of describing particular embodiments only and is not intended to be limiting of exemplary embodiments.

Also, thickness or sizes of layers in the drawings are exaggerated for convenience of explanation and clarity, and the same reference numerals denote the same elements in the drawings. As used herein, the term "and/or" includes any and all combinations of one or more of the associated listed items.

The terminology used herein is for the purpose of describing particular embodiments only and is not intended to be limiting of exemplary embodiments. As used herein, the singular forms "a," "an" and "the" are intended to include the plural forms as well, unless the context clearly indicates otherwise. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Furthermore, the term 'separator (isolation film)' used throughout the present specification includes separator generally used in liquid electrolyte batteries using a liquid electrolyte with low compatibility with the separator. Furthermore, the term 'separator' used in the present specification includes an intrinsic solid polymer electrolyte and/or a gel solid polymer electrolyte, in which, the electrolyte and the separator may be considered as a same element component since the electrolyte is strongly bounded to the separator. Therefore, it is necessary to define the term 'separator' as defined in the present specification.

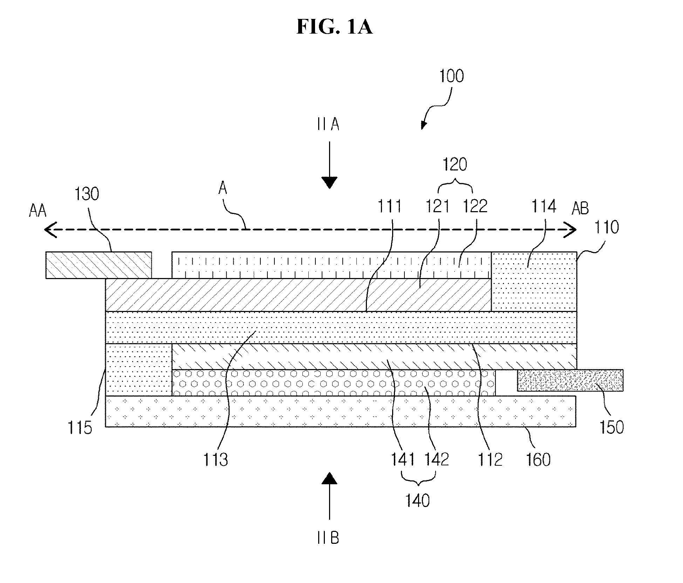

FIG. 1 is a sectional view of an electrode assembly 100 according to an embodiment of the present invention. The arrow A indicates a winding axis direction.

As shown in FIG. 1, the electrode assembly 100 according to the present invention includes an electric insulation layer 110, a first electrode 120 formed on a main surface of the electric insulation layer 110, a first lead 130 electrically connected to the first electrode 120, a second electrode 140 formed on other main surface of the electric insulation layer 110, a second lead 150 electrically connected to the second electrode 140, and a separator 160 arranged on the second electrode 140. According to other embodiment, the separator 160 may also be arranged on the first electrode 120.

The electric insulation layer 110 may include a base unit 113 including a first main surface 111 and a second main surface 112 opposite to the first main surface 111. As shown in FIG. 1, the electric insulation layer 110 may include a first anti-leakage unit 114 formed at a portion of the edge portion of the first main surface 111 of the base unit 113 and a second anti-leakage unit 115 formed at a portion of the edge portion of the second main surface 112. The first anti-leakage unit 114 and the second anti-leakage unit 115 may have embossed shapes protruding from the respective main surfaces of the base unit 113 and may be integrated with the base unit 113. In other aspect, it may be understood that the remaining portions of the base unit 113 other than the anti-leakage units 114 and 115 has engraved shapes depressed from the anti-leakage units 114 and 115.

In an example of the present invention, to form the anti-leakage units 114 and 115 to be integrated with the base unit 113, the base unit 113 and the anti-leakage units 114 and 115 may be simultaneously formed by patterning or molding a material for forming the electric insulation layer 110, or the anti-leakage units 114 and 115 may be formed independently from the base unit 113 by laminating the anti-leakage units 114 and 115 on the base unit 113. The first anti-leakage unit 114 prevents outward leakage of a first active material layer constituting the first electrode 120, whereas the second anti-leakage unit 115 prevents outward leakage of a second active material layer constituting the second electrode 140.

In an example of the present invention, thicknesses of the first anti-leakage unit 114 and the second anti-leakage unit 115 may be greater than the base unit 113 that functions as a mechanical supporting unit and an electric insulator for separating the first electrode 120 and the second electrode 140 described below from each other. The first anti-leakage unit 114 and the second anti-leakage unit 115 may be formed on the other portion of the base unit 113 except the two opposite end portions AA and AB in the winding axis direction A. Detailed descriptions thereof will be given below.

The electric insulation layer 110 may include a flexible material that is suitable to form a roll structure and has sufficient mechanical strength. The flexible material may include natural or synthetic flexible resin-based materials. For example, the flexible resin-based material may be a cellulose-based resin, a polyester resin, such as polyethylene terephthalate (PET) and polyethylene naphthalate (PEN), a polyethylene resin, a polypropylene resin, a polyvinyl chloride resin, a polycarbonate (PC), polyether sulfone (PES), polyether ether keton (PEEK), polyphenylene sulfide (PPS), polyimide, tri-acetyl cellulose, polyvinyl alcohol, ethylene-vinyl alcohol copolymer, a polyamide-based resin, or a combination thereof, wherein the polyamide-based resin may be nylon 6, nylon 66, nylon 4, or nylon 6-11. However, the above-stated materials are merely examples, and the present invention is not limited thereto. Various other natural or synthetic flexible resin-based materials may also be applied thereto.

Thickness of the electric insulation layer 110 may be determined for the electric insulation layer 110 to have a sufficient strength to support the first electrode 120 and the second electrode 140, and at the same time, to be fabricated into a roll structure. For example, thickness of the electric insulation layer 110 may be from about 1 *µ*m to about 100 *µ*m and may preferably be from about 1 *µ*m to about 10 *µ*m. Since the electric insulation layer 110 has a thickness smaller than or equal to about 100 *µ*m and may still provide excellent mechanical strength and deformability, the electric insulation layer 110 may contribute to reduction of the overall thickness of the electrode assembly 100. Advantages and features of the electric insulation layer 110 will become more clarified in the descriptions below.

The first electrode 120 is formed on the first main surface 111 of the electric insulation layer 110. The first electrode 120 may be an electrically positive electrode or an electrically negative electrode. The first electrode 120 may include a first current collecting layer 121 formed on the first main surface 111 and a first active material layer 122 formed on the first current collecting layer 121. If the first electrode 120 is an electrically positive electrode, the first current collecting layer 121 may contain a metal, such as aluminum, a stainless steel, titanium, or an alloy thereof, and may preferably include aluminum or an alloy thereof.

In other example of the present invention, the first current collecting layer 121 may be formed of a material other than the above-stated metals. For example, the first current collecting layer 121 may be formed of a conductive resin composition. The conductive resin composition may be a composite material including a resin for constituting a matrix and conductive particles dispersed in the matrix, such as metal particles or carbon particles. Alternatively, the conductive resin composition may be any of other resin-based materials known in the art, capable of conducting electrons.

Since the electric insulation layer 110 may support the first current collecting layer 121 and provide mechanical strength for forming a roll structure, the first current collecting layer 121 may be formed as a thin film. Thickness of the first current collecting layer 121 formed as a thin-film may be, for example, from about 0.01 *µ*m to about 20 *µ*m and may preferably be from about 0.01 *µ*m to about 10 *µ*m.

The first current collecting layer 121 including the above-stated metal may be formed by using a vapor deposition method for forming a thin conductive layer, such as pulsed laser deposition (PLD), RF sputtering, RF magnetron sputtering, DC sputtering, DC magnetron sputtering, metal organic chemical vapor deposition (MOCVD), molecular beam epitaxy (MBE), or a combination thereof. However, it is merely an example, and the present invention is not limited thereto. For example, the first current collecting layer 121 may also be formed by using an electroless plating method for forming a thin-film by using an aqueous solution reaction between corresponding metal ions for constituting the first current collecting layer 121 and a reducing agent.

In an example of the present invention, the first current collecting layer 121 containing a metal may be metallic filaments (long fibers) having a thickness from about 1 *µ*m to about 200 *µ*m. The metallic filaments may be fibrously processed to have a suitable fibrous texture, such as a weaved structure, a felt-like structure, or a spiral structure in order to implement the first current collecting layer 121.

In other example of the present invention, if the first current collecting layer 121 contains the above-stated conductive resin composition, the first current collecting layer 121 may be formed by laminating a solid conductive film formed from mixture of a corresponding polymer resin with a conductor, such as metal powders and carbon particles, or by applying a liquid conductive composition and then drying the composition.

As described above, the first electrode 120 includes the first current collecting layer 121 and the first active material layer 122 stacked in the order stated. However, it is merely an example, and the present invention is not limited thereto. For example, a material capable of intercalation and deintercalation of metal ions and exhibiting excellent electric conductivity, such as carbon and carbon nanotubes, may function as both a current collecting layer and an active material layer at the same time. Therefore, when an electrode is formed by using such a material, the first current collecting layer 121 arranged below the first active material layer 122 may be omitted, thereby further reducing thickness of the first electrode 120.

After the first current collecting layer 121 is formed on the first main surface 111 of the electric insulation layer 110, the first active material layer 122 may be formed on the first current collecting layer 121. The first active material layer 122 may be formed on the first main surface 111 of the electric insulation layer 110 by using a method of paste, slurry, print, spray, or dry-coat as stated below. If necessary, a natural drying operation or a drying operation accompanied with a heating operation may be further performed. Furthermore, as described above, if the first current collecting layer 121 is formed to have a fibrous structure of metallic filaments, the first active material layer 122 may be impregnated into the first current collecting layer 121 or a mixture of the first current collecting layer 121 and the first active material layer 122 may be applied on to the electric insulation layer 110, such that the first current collecting layer 121 and the first active material layer 122 substantially form a common layer having a designated thickness.

The first active material layer 122 may include a suitable material based on whether a battery is a primary battery or a secondary battery and based on the corresponding polarity. For example, if the first electrode 120 is a positive electrode, the first active material layer 122 may include manganese oxide, electrolytic manganese dioxide (EMD), nickel oxide, lead oxide, lead dioxide, silver oxide, iron sulfide, or conductive polymer particles.

In a case of a secondary battery, the first active material layer 122 may include a Li compound containing at least one metal selected from a group consisting of Ni, Co, Mn, Al, Cr, Fe, Mg, Sr, V, La, and Ce and at least one non-metal ions selected from a group consisting of O, F, S, P, and combinations thereof. For example, a positive electrode active material layer may have a chemical formula LiₐA_{1-b}B_{b}D₂, where, in the chemical formula, A may be selected from a group consisting of Ni, Co, Mn, and combinations thereof, B may be selected from a group consisting of Al, Ni, Co, Mn, Cr, Fe, Mg, Sr, V, rare-earth atoms, and combinations thereof, and D may be selected from a group consisting of O, F, S, P, and combinations thereof, 0.95 ≤ a ≤ 1.1, and 0 ≤ b ≤ 0.5.

The first active material layer 122 may be particles having a size from about 0.01 *µ*m to about 100 *µ*m. Preferably, the first active material layer 122 may be particles having a size from about 0.1 *µ*m to about 15 *µ*m. However, it is merely an example, and a size of particles constituting the first active material layer 122 may be suitably selected based on characteristics required to a battery. In one example of the present invention, if the first active material does not contain a carbon-based material, such as graphite, the first active material layer 122 may further contain a conductive material. The conductive material may be added to the first active material layer 122 at a weight ratio of from about 2 % to about 15 % with respect to the overall weight of the first active material layer 122 mixed with the conductive material. The conductive material may be, for example, carbon black, ultrafine graphite particles, fine carbon like acetylene black, nano metal particle paste, or an indium tin oxide (ITO) paste.

The first lead 130 may be electrically connected to an exposed surface of the first current collecting layer 121, on which the first active material layer 122 is not formed, and may extend and protrude out of the electric insulation layer 110 by a designated length. The first lead 130 may be mechanically attached to, fused to, or welded to the first current collecting layer 121. The fusing or the welding may be performed by using a resistive method, a friction method, a laser method, or other adhering methods known in the art. However, the present invention is not limited thereto.

The first lead 130 may be a rectangular metal thin-film or may have a pattern other than a rectangular shape. Furthermore, the first lead 130 may include aluminum, titanium, a stainless steel, gold, tantalum, niobium, hafnium, zirconium, vanadium, indium, cobalt, tungsten, tin, beryllium, molybdenum, or an alloy thereof. Preferably, the first lead 130 may include aluminum or an aluminum alloy.

In one example of the present invention, the first lead 130 may be integrated with the first current collecting layer 121. For example, a portion of the first current collecting layer 121 may extend and protrude out of the electric insulation layer 110 by a designated length and may function as the first lead 130.

The second electrode 140 is formed on the second main surface 112 of the electric insulation layer 110. The second electrode 140 has a polarity opposite to that of the first electrode 120. The second electrode 140 may include a second current collecting layer 141 formed on the second main surface 112 and a second active material layer 142 formed on the second current collecting layer 141. If the second electrode 140 is an electrically negative electrode, the second current collecting layer 141 may be formed from copper, nickel, a stainless steel, or an alloy thereof and may preferably be formed of copper or a copper alloy.

In other example of the present invention, similar to the first current collecting layer 121 as described above, the second current collecting layer 141 may be formed from a non-metal material. For example, the second current collecting layer 141 may be formed from a conductive resin composition. The second current collecting layer 141 formed from a conductive resin component may be formed similarly as the first current collecting layer 121, and the descriptions related the first current collecting layer 121 given above may be referred to for the second current collecting layer 141.

Thickness of the second current collecting layer 141 may be selected in a same range as the range of thicknesses of the first current collecting layer 121. For example, thickness of the second current collecting layer 141 may be from about 0.01 *µ*m to about 20 *µ*m and may preferably be from about 0.01 *µ*m to about 10 *µ*m. As similar to the first current collecting layer 121, the second current collecting layer 141 including a metal may be a metal foil formed by using any of various deposition methods (e.g., pulsed laser deposition (PLD)), plating methods, and film forming methods (e.g., lamination) or a conductive layer having a weaved structure, a felt-like structure, or a combination thereof including metallic filaments. Furthermore, like the first current collecting layer 121, the second current collecting layer 141 may contain a conductive resin composition.

In other example of the present invention, the second electrode 140 may be formed of a material capable of intercalation and deintercalation of metal ions and exhibiting excellent electric conductivity, such as carbon and carbon nanotubes, and capable of functioning as both a current collecting layer and an active material layer at the same time. For example, the second current collecting layer 141 arranged above the second active material layer 142 may be omitted, thereby further reducing thickness of the second electrode 140.

After the second current collecting layer 141 is formed on the second main surface 112 of the electric insulation layer 110, the second active material layer 142 may be formed on the second current collecting layer 141. The second active material layer 142 may be formed on the second main surface 112 of the electric insulation layer 110 by paste coating a suitable material. If necessary, a natural drying operation or a drying operation accompanied with a heating operation may be further performed.

The second active material layer 142 may contain a suitable material based on whether the second active material layer 142 is for a primary battery or a secondary battery and polarity of thereof. For example, if the second electrode 140 is a negative electrode and a corresponding battery is a primary battery, the second active material layer 142 may include zinc, aluminum, iron, lead, or magnesium particles. Furthermore, if the corresponding battery is a secondary battery, the second active material layer 142 may include a carbon-based material capable of intercalating and deintercalating lithium ions, such as low-crystalline carbon or high-crystalline carbon. The low-crystalline carbon may be soft carbon or hard carbon. The high-crystalline carbon may a high temperature plastic carbon, such as natural graphite, Kish graphite, pyrolytic carbon, mesophase pitch based carbon fiber, meso-carbon micro-beads, mesophase pitches, and petroleum or coal tar pitch derived cokes. A negative electrode active material layer may include a binder material, where the binder material may be a polymer material, such as vinylidene fluoride-hexafluoropropylene copolymer (PVDF-co-HFP), polyvinylidenefluoride, polyacrylonitrile, and polymethylmethacrylate. In other example of the present invention, to provide a high-capacity secondary battery, the second active material layer 142 may contain a metal, such as S, Si, Sn, Sb, Zn, Ge, Al, Cu, Bi, Cd, Mg, As, Ga, Pb, and Fe, or an intermetallic compound, which may be alloyed or dealloyed with lithium. However, it is merely an example, and the present invention is not limited thereto. For example, a lithium foil or a lithium fiber with enhanced stability may be used.

Furthermore, like the first active material layer 122, the second active material layer 142 may be particles having a size from about 0.01 *µ*m to about 100 *µ*m. Preferably, the second active material layer 142 may be particles having a size from about 0.1 *µ*m to about 15 *µ*m. However, it is merely an example, and a size of particles constituting the second active material layer 142 may be suitably selected based on characteristics required to a battery. If the second active material layer 142 does not contain a carbon-based material, such as graphite, the second active material layer 142 may further contain a conductive material. The descriptions related the first active material layer 122 given above may be referred to for the details of weight ratios and types of such conductive materials.

The second lead 150 may be directly and electrically connected to a portion of the second current collecting layer 141, wherein the second active material layer 142 is not formed on the portion of the second current collecting layer 141, and may extend by a designated length out of the electric insulation layer 110 in a outward direction opposite to the first lead 130. The second lead 150 may be mechanically attached, fused, or welded to the second current collecting layer 141. The fusing or the welding may be performed by using a method selected from a resistive method, an ultrasonic method, a laser method, or any other equivalent method. However, the present invention is not limited thereto. In other example of the present invention, the second lead 150 may be integrated with the second current collecting layer 141. For example, the second current collecting layer 141 may extend out of the electric insulation layer 110 by a desired length and function as the second lead 150.

The second lead 150 may be a rectangular metal thin-film, a patterned metal thin film or metallic fibers. Furthermore, the second lead 150 may contain copper, nickel, tantalum, niobium, hafnium, zirconium, vanadium, indium, cobalt, tungsten, tin, beryllium, molybdenum, or an alloy thereof. Preferably, the second lead 150 may contain copper or an copper alloy.

The first and second leads 130 and 150 are entirely and electrically connected to edge portions of current collecting layers 121 and 141 in directions perpendicular to the winding axis direction AA described below, and thus, low-resistant bonding may be obtained based on such a sufficient contacting areas, and internal resistance of a battery may be significantly reduced. In addition, the bonding resistance may be constant regardless of a number of times that a roll structure is wound and thus a high-capacity and highly efficient battery may be implemented.

The separator 160 may be located at and closely contact a selected one of or both the first electrode 120 and the second electrode 140. The separator 160 may contain a fine porous membrane, a woven fabric, nonwoven fabric, an intrinsic solid polymer electrolyte film, a gel solid polymer electrolyte film, a fine porous membrane coated with inorganic ceramic powders, or a combination thereof. The intrinsic solid polymer electrolyte film may contain a linear polymer material or a cross-linked polymer material. The gel solid polymer electrolyte film may be one from a polymer containing a plasticizer including a salt, a polymer containing a filler, and a pure polymer or a combination thereof. The above-stated materials regarding the separator 160 are merely examples, and an arbitrary suitable electroinsulative material that may be easily deformed, exhibits excellent mechanical strength, and is not torn apart or broken due to deformation of the electrode assembly 100 may be used to form the separator 160, where the electroinsulative material may also exhibit a suitable ion conductivity. The separator 160 may be a single layer or multi layers, where the multi layers may be a stack of same single layers or a stack of single layers formed of different materials.

In consideration of durability, shutdown function, and safety of a battery, thickness of the separator 160 is from about 10 *µ*m to about 300 *µ*m, may be from about 10 *µ*m to about 40 *µ*m, and may preferably be from about 10 *µ*m to about 25 *µ*m. An end portion of the separator 160 may further extend in the axial direction of the winding axis A or out of an edge of the electric insulation layer 110 perpendicular thereto, such that length of the separator 160 becomes longer than that of the electric insulation layer 110. As described above, the extra portion of the separator 160 extending out of the electric insulation layer 110 provides a margin for deformation that may occur based on possible contraction-deformation of the electrode assembly 100 during chemical reaction of a battery, thereby preventing a short-circuit between the first and second electrodes 120 and 140. Furthermore, if a single battery is embodied with a plurality of electrode assemblies 100 to increase capacity of the battery, the extra portion of the separator 160 may be arranged between the plurality of electrode assemblies 100 and insulate the plurality of electrode assemblies 100 from one another.

According to the electrode assembly 100 of the above embodiments, compared to a conventional electrode assembly 100 in which electrodes having different polarities are separated and provided as two independent structures, the overall structure may be simplified, because a negative electrode and a positive electrode may be provided as a single structure, and a manufacturing process for aligning two separated electrodes in the conventional two independent electrode structure may be omitted in a process for fabricating battery 200, and thus the overall fabrication process may be simplified.

Furthermore, in case of an electrode assembly in the conventional in which a metal current collecting layer functions as a corresponding electrode, each of metal current collecting layers corresponding to a positive electrode and a negative electrode is generally designed to have a thickness equal to or greater than 20 *µ*m. Considering that thicknesses of active material layers corresponding to a positive electrode and a negative electrode are from about 40 *µ*m to about 100 *µ*m, the overall thickness t1 of the electrode assembly becomes from about 60 *µ*m to about 120 *µ*m. As a result, in an electrode assembly in the related art, thickness ratio of first and second current collecting layers with respect to the overall thickness of the electrode assembly may be from 1/3 to 1/6.

However, according to the above embodiments of the present invention, the separate electric insulation layer 110 functions as a mechanical supporting structure instead of the first and second current collecting layers 121 and 141, thicknesses of the first and second current collecting layers 121 and 141 may be relatively small as compared to those in an electrode assembly in the conventional electrode assembly. For example, if it is assumed that thickness of each of the first and second active material layers 122, 142 is almost identical to thickness of an electrode assembly in the related art, that is, from about 20 *µ*m to about 50 *µ*m, thickness of each of the first and second current collecting layers 121 and 141 is about 0.01 *µ*m, and thickness of the electric insulation layer 110 is about 1 *µ*m, the overall thickness of the electrode assembly 100 may be from about 41 *µ*m to about 101 *µ*m. Therefore, a ratio (t2/t1) of a thickness t2 of each current collecting layer against the overall thickness t1 of the electrode assembly 100 may be from 1/41 to 1/101 and thus may be significantly reduced compared to the conventional electrode assembly. As a result, volume of the wound electrode assembly 100 can be also reduced due to reduced volume of the electrode assembly 100, and thus energy density may be increased with respect to a same volume, as compared to the conventional electrode assembly.

Furthermore, according to embodiments of the present invention, since the thin and flexible electric insulation layer 110 may support the electrode assembly 100, thicknesses of the first and second current collecting layers 121 and 141 may be reduced. Therefore, flexibility of the first and second current collecting layers 121 and 141 may be improved, and thus a winding operation for packaging the electrode assembly may be easily performed.

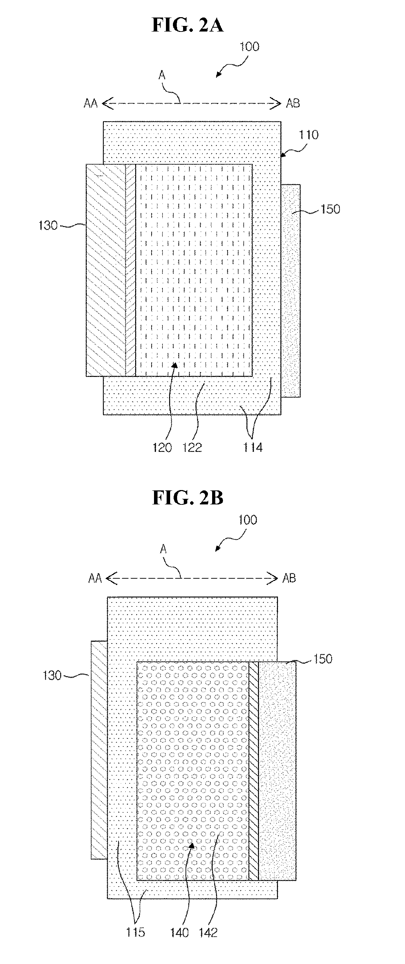

FIGS. 2A and 2B are a plan view and a bottom view of the electrode assembly of FIG.1, viewed from above IIA and below IIB, respectively. The arrow A indicates the same winding axis direction as that of FIG. 1.

As shown in FIG. 2A, the first anti-leakage unit 114 of the electric insulation layer 110 may be formed on the first main surface 111 of the base unit 113 to open at least a portion of an end AA of the first main surface 111 perpendicular to the winding axis direction A of the first main surface 111 and surround the other edges of the first main surface 111. For example, the first anti-leakage unit 114 is formed to have a substantially U-like shape, where the first electrode 120 and the first lead 130 may be accommodated inside the first anti-leakage unit 114. In other example of the present invention, although not shown, the first anti-leakage unit 114 may have a shape that an edge parallel to the winding axis of the base unit 113 is opened together with the edge perpendicular to the winding axis direction A and surrounds other edges perpendicular to the winding axis direction. In this case, the first anti-leakage unit 114 may have an L-like shape.

As a result, the first active material layer 122 constituting the first electrode 120 is not leaked at least in the other direction of the winding axis direction A, e.g., a direction AB, other than the direction AA of the winding axis direction A. Furthermore, a portion of the electric insulation layer 110 corresponding to the first lead 130 is opened without the first anti-leakage unit 114, thereby preventing thickness of the electrode assembly 100 from excessively increasing nearby an area of the electrode assembly 100 where the first lead 130 protrudes.

Referring to FIG. 2B, the second anti-leakage unit 115 of the electric insulation layer 110 may be formed on the second main surface 112 of the base unit 113 to open at least a portion of the end AB of the second main surface 112 perpendicular to the winding axis direction A of the second main surface 112 and surround the other edges of the second main surface 112. For example, the second anti-leakage unit 115 is formed to have a substantially U-like shape, where the second electrode 140 and the second lead 150 may be accommodated inside the second anti-leakage unit 115.

In other example of the present invention, although not shown, the second anti-leakage unit 115 may have a shape that surrounds the end AA that is parallel to the winding axis of the base unit 113 and the first anti-leakage unit 114 opens on, while opening the other end that is parallel to the winding axis of the base unit 113 and the first anti-leakage unit 114 closes on. In this case, the first anti-leakage unit 114 may have an L-like shape. In either case, the first lead 130 is formed at the end AA in the winding axis direction A, the second lead 150 is formed at the other end AB, the first anti-leakage unit 114 exists at the other end AB in the winding axis direction A, and the second anti-leakage unit 115 exists at the end AA in the winding axis direction A. Therefore, the first active material layer 122 constituting the first electrode 120 is not leaked via the other end AB in the winding axis direction A, and the second active material layer 142 constituting the second electrode 140 is not liked via the end AA in a winding axis direction A. As a result, despite of strong spinning pressure during fabrication of a roll structure, a short-circuit between the first electrode 120 and the second electrode 140 due to leakage of the active materials may be prevented. The first lead 130 and the second lead 150 as described above extend in directions opposite to each other toward the end AA and the other end AB in the winding axis direction A and protrude from side surfaces of the electric insulation layer 110, respectively. Therefore, if the first lead 130 is connected to a first electrode (120; e.g., a positive electrode) and the second lead 150 is connected to a second electrode (140; e.g., a negative electrode), a positive terminal and a negative terminal for battery may be formed in respective directions opposite to each other. In example of the present invention, the first lead 130 and the second lead 150 may further extend out of the separator 160 and may be electrically connected to terminals described below with ease.

In some examples of the present invention, the first electrode 120 and the second electrode 140 may be apart from end portions of the electric insulation layer 110 parallel to the winding axis direction by different distances. The innermost electrode arranged in a roll structure formed by winding the electric insulation layer 110 around the winding axis direction A may be the farthest distance apart from the winding axis direction A. For example, if a roll structure is formed by winding the electrode assembly 100 in the winding axis direction, such that the second main surface 112 on which the second electrode 140 is formed becomes the inner surface, the second electrode 140 may be farther apart from the winding axis direction A compared to the first electrode 120. As a result, an accurate facing area of the opposite electrodes may be obtained in a roll structure without wasting active materials constituting electrodes.

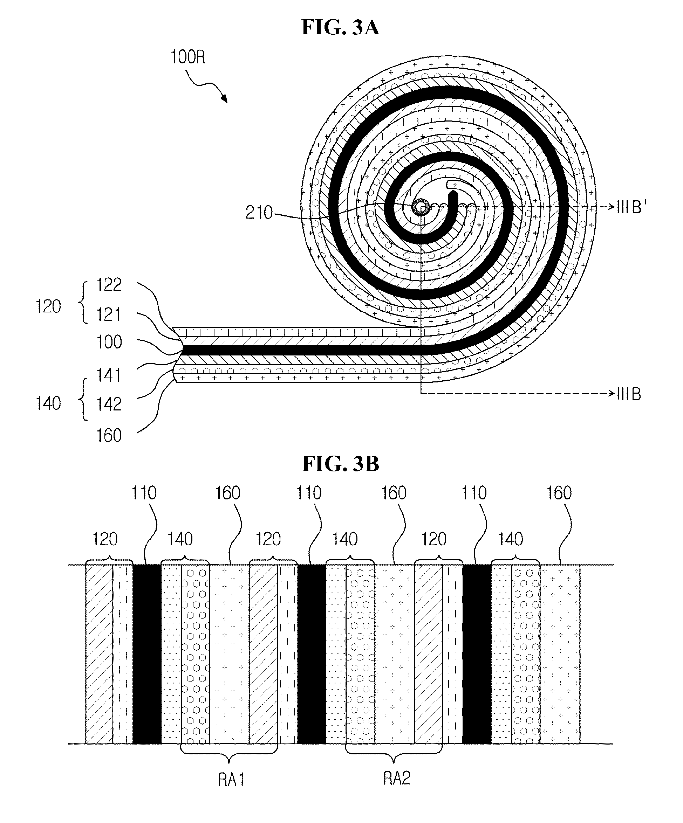

FIGS. 3A and 3B are sectional diagrams showing a roll structure formed by winding an electrode assembly around the winding axis direction A according to an embodiment of the present invention, where FIG. 3B is a magnified sectional diagram showing a section obtained along a line IIIA-IIIB of FIG. 3A.

Referring to FIGS. 3A and 3B, a roll structure 100R may be implemented by winding the electrode assembly 100 around the winding axis direction (A; a direction perpendicular to the drawing surface). As a result, a first electrode 120 arranged on a first main surface (111 of FIG. 1) of an electric insulation layer 110 and a second electrode 140 arranged on a second main surface (112 of FIG. 1) may face each other via an separator 160.

As shown in FIG. 3A, a direction in which the electrode assembly 100 is wound may be defined, such that the separator 160 is arranged to become the outermost portion of the roll structure 100R. However, the direction in which the electrode assembly 100 is wound is merely an example, and the electrode assembly 100 may be wound in a direction opposite thereto to form a roll structure in which the first electrode 120 becomes the outermost portion of the roll structure. Furthermore, as described above, the separator 160 may be arranged on the first electrode 120 to form a roll structure.

In any case of the directions in which the electrode assembly 100 is to be wound, as shown in FIG. 3B, the separator 160 is interposed between the first electrode 120 and the second electrode 140, and thus the first electrode 120 and the second electrode 140 face each other via the separator 160 in the roll structure. As a result, electrochemical reacting areas RA1 and R2 may be formed inside the roll structure.

According to an embodiment of the present invention, since a winding operation may be easily performed due to the electric insulation layer 110 having excellent flexibility and the first and second current collecting layers 121 and 141 having reduced thicknesses, shape of the roll structure may be diversified. For example, the roll structure may be wound to have a circular cross-section, as shown in FIG. 3A. In other example of the present invention, the roll structure may have any of various cross-sectional shapes, e.g., an elliptical shape, a polygonal shape including a triangular shape and a rectangular shape. Therefore, shape of the roll structure may be designed to be accommodated in various forms of batteries, e.g., a cylindrical battery, a quadrilateral battery, and etc. In addition, according to an embodiment of the present invention, a lead wire may substantially expand throughout a side of an electrode along the winding axis direction with respect to the entire roll structure, internal resistance may be reduced, and thus charging/discharging efficiency and charging/discharging rate may be improved.

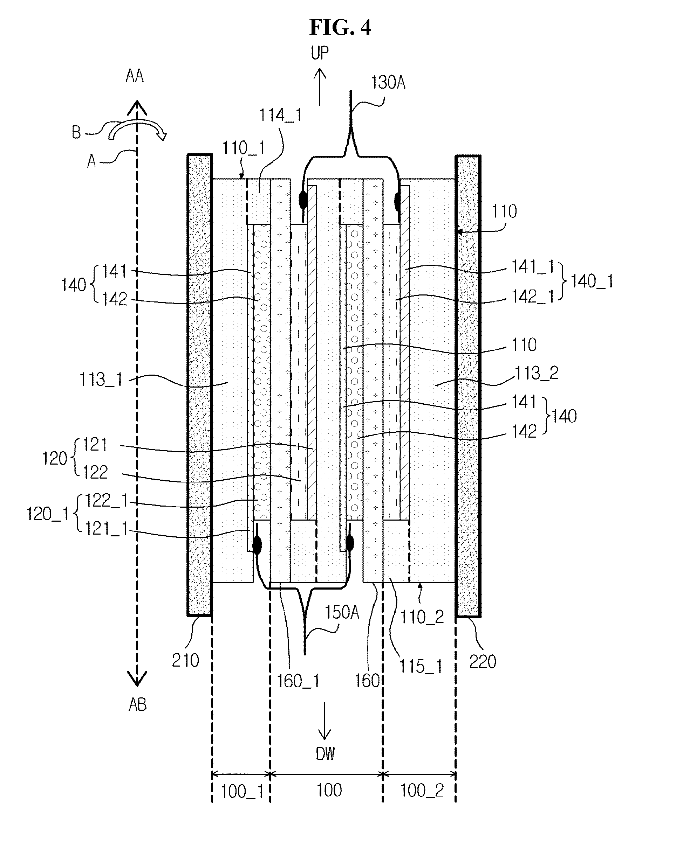

FIG. 4 is a sectional diagram showing that the electrode assembly 101 and a roll core 210 are attached to a case 220.

As shown in FIG. 4, the electrode assembly 101 may include the roll core 210 functioning as the winding axis. In other words, the electrode assembly 101 may be wound around the roll core 210 as the winding axis. Although the roll core 210 may have a rod-like shape, the roll core 210 may also have a hollow pipe-like shape by being rolled or a hollow rod-like shape. The interior of a pipe-like structure may be utilized as a cooling channel of a battery, where detailed descriptions thereof will be given below. FIG. 4 shows an example of a section of a thin plate-like roll core 210 that may be rolled to form a hollow pipe-like structure. In an example of the present invention, the exterior of a wound roll structure may be coupled to the case 220 as shown in FIG. 4. The dotted line A indicates the winding axis direction.

In some examples of the present invention, to increase capacity of a battery, the electrode assembly 101 may further include first and second sub electrode assemblies 100_1 and 100_2 facing the respective main surfaces of the electrode assembly 100 having the same configuration as the electrode assembly shown in FIG. 1. Although each of the first and second sub electrode assemblies 100_1 and 100_2 has a configuration similar to that of the electrode assembly 100 described above with reference to FIG. 1, each of the first and second sub electrode assemblies 100_1 and 100_2 includes anti-leakage units 114_1 and 115_1 on only one main surface of a base unit 113_1 and includes only electrodes of a single polarity, which may be differentiated from an electrode assembly (100 of FIG. 1) having a first electrode and a second electrode facing each other across a base unit.

The first and second sub electrode assemblies 100_1 and 100_2 face each other via separators 160_1 and 160 on main surfaces of the electrode assembly 100, where polarity of electrodes of the first and second sub electrode assemblies 100_1 and 100_2 differs from that of the electrode on the corresponding main surface of the electrode assembly 100. For example, if an electrode of a main surface of the electrode assembly 100 faced by the first sub electrode assembly 100_1 is a positive electrode, an electrode 120_1 of the first sub electrode assembly 100_1 may be a negative electrode. Similarly, if an electrode of the other main surface of the electrode assembly 100 faced by the second sub electrode assembly 100_2 is a negative electrode, an electrode 140_1 of the second sub electrode assembly 100_2 may be a positive electrode. To this end, the electrodes 120_1 and 140_1 of the first and second sub electrode assemblies 100_1 and 100_2 may have suitable first current collecting layers 121_1 and 141_1 and active materials 122_1 and 142_1, respectively. The descriptions given above may be referred to for descriptions of these materials.

Electric insulation layers 110_1 and 110_2 of the sub electrode assemblies 100_1 and 100_2 may include base units 113_1 and 113_2, respectively, where anti-leakage units 114_1 and 115_1 may be respectively formed on corresponding main surfaces of the base units 113_1 and 113_2. As described above with reference to FIG. 1, the anti-leakage units 114_1 and 115_1 may be integrated with the base units 113_1 and 113_2 in the form of embossed pattern protruding from the respective main surfaces of the base units 113_1 and 113_2.

The anti-leakage units 114_1 and 115_1 may be formed to open at least portions of edges perpendicular to the winding axis direction A and surround the remaining edges. Corresponding electrode layers and leads may be accommodated inside the anti-leakage units 114_1 and 115_1 formed as described above, and thus the leads may be exposed out of the electric insulation layers 110_1 and 110_2. In an example of the present invention, the anti-leakage units 114_1 and 115_1 may be formed at edge portions of the base units 113_1 and 113_2 to have a U-like shape or an L-like shape, as described above with reference to FIGS. 2A and 2B.

The opened portions (? 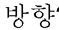 ?) of the anti-leakage units 114_1 and 115_1 may be alternated inside a roll structure in a direction perpendicular to the winding axis direction A, that is, a diameter-wise direction from the spinning center of the roll structure. As a result, both end portions (or both end portions in the winding axis direction) of the roll structure may include a plurality of lead layers that are formed as leads connected to respective electrodes having a same polarity are successively exposed (??). A first polarity common lead unit 130A and a second polarity common lead unit 150A may be provided by physically contacting and electrically connecting the lead layers to one another at the respective end portions of a roll structure. The first polarity common lead unit 130A and the second polarity common lead unit 150A may extend outward further than end portions of the roll core 210 and the case 220.

The opened portions of the anti-leakage units 114_1 and 115_1 may be alternated inside a roll structure in a direction perpendicular to the winding axis direction A, that is, a radial direction from the spinning center of the roll structure. As a result, a respective lead connected to respective electrodes having a same polarity may be exposed at both end portions (or both end portions in the winding axis direction) of the roll structure in a form of a multi layered structure. The lead in a multi layered structure may be electrically connected to one another, thereby providing the first polarity common lead unit 130A and the second polarity common lead unit 150A. The first polarity common lead unit 130A and the second polarity common lead unit 150A may extend outward further than end portions of the roll core 210 and the case 220.

The first polarity common lead unit 130A and the second polarity common lead unit 150A may be provided by temporarily welding the respective leads (refer to 130 and 150 of FIGS. 2A and 2B) exposed in the upward direction UP and the downward direction DW to each other. The first polarity common lead unit 130A and the second polarity common lead unit 150A may ease packaging of a battery and reduce internal resistance. The temporary welding may be provided via a resistive method, an ultrasonic method, a laser method, any other equivalent fusing, pressing, or clamping method, or an adhesive. However, the present invention is not limited thereto.

In the electrode assembly 101, only the second electrode 140 (or the first electrode 120) is disposed on a surface of the electric insulation layer 110 at a winding starting region (e.g., a region at which the roll core 210 is initially rolled once) and only the first electrode 120 (or the second electrode 140) is disposed on a surface of the electric insulation layer 110 at a winding ending region (e.g., a region at which the roll core 210 is rolled once for the last time), and thus an electrochemical reacting area may be embodied. From other point of view, if the second electrode 140 is arranged at the winding starting region, the first electrode 120 is arranged via the separator 160 on an outer side nearby the second electrode 140. Furthermore, if the first electrode 120 is arranged at the winding ending region, the second electrode 140 is arranged via the separator 160 on an inner side nearby the first electrode 120. Therefore, an electrochemical reacting area may be formed throughout the entire area of the electrode assembly 101 without a wasted electrochemical area.

Lengths (or heights) of the roll core 210 and the case 220 may be identical to or longer than length (or height) of the electrode assembly 101, and thus a first terminal unit and a second terminal unit as described below may be easily attached thereto.

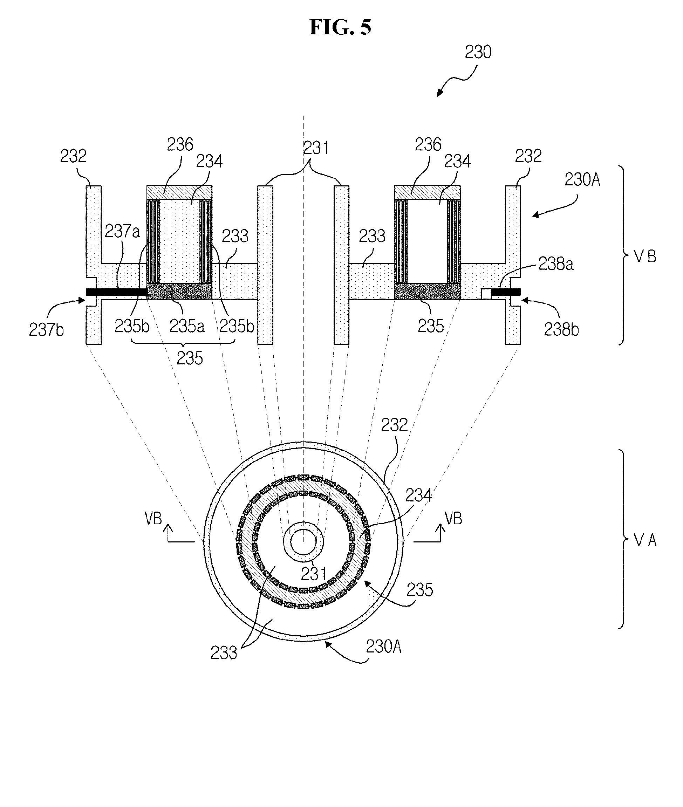

FIG. 5 is a diagram showing a plan view VA of a first terminal unit provided at a side of a battery including a roll structure according to an embodiment and a magnified sectional view VB thereof obtained along a line VB-VB'.

Referring to FIG. 5, the first terminal unit 230 may be attached to a side of a roll structure as described above with reference to FIGS. 1 through 4 and function as an external terminal for a positive electrode or a negative electrode. Preferably, the first terminal unit 230 may be an external terminal for a positive electrode.

The first terminal unit 230 includes a first cover 230A, a protrusion 234, and a first terminal 235. The first terminal 235 may be electrically connected to a first common lead unit (refer to 130A of FIG. 4). Furthermore, the first cover 230A and the protrusion 234 may be insulators, whereas the first terminal 235 may be a conductor.

The first cover 230A includes an inner cylinder unit 231 connected to the roll core 210 or extending from the roll core 210, an outer cylinder unit 232 connected to the case 220 or extending from the case 220, and a connecting unit 233 interconnecting the inner cylinder unit 231 and the outer cylinder unit 232. The protrusion 234 is formed at the connecting unit 233 and protrudes outward by a desired length, where the protrusion 234 may be formed to have a circular type.

The first terminal 235 is formed to have a approximately U-like shape including one inner wall 235a and two sidewalls 235b, where a first common lead unit (refer to 130A of FIG. 4) may be electrically connected to the inner wall 235a. The first terminal 235 may have a shape surrounding the protrusion 234. For example, the inner wall 235a is located at the bottom of the protrusion 234, and the two sidewalls 235b closely contact two opposite sides of the protrusion 234. As a result, the first terminal 235 may have a protrusion-like shape.

In some example of the present invention, the two sidewalls 235b of the first terminal 235 may be formed as bent wires with a linear pattern, a diagonal line pattern, a spiral pattern, or a curve line pattern for highly efficient flow of charging/discharging currents, and thus the sidewalls 235b may function as springs. Furthermore, embossings, protrusions, or other equivalent structures may be formed at the sidewalls 235b. In an example of the present invention, in the first terminal 235, an insulation-finished portion 236 may be formed on the protrusion 234 to maintain insulation in a normal state. However, the present invention is not limited thereto.

In an example of the present invention, the first terminal 235 may contain aluminum, titanium, stainless steel, gold, tantalum, niobium, hafnium, zirconium, vanadium, indium, cobalt, tungsten, tin, beryllium, molybdenum, or an alloy thereof. Preferably, the first terminal 235 may contain aluminum or an aluminum alloy.

The voltage sensing unit 237a and/or the temperature sensing unit 238a may be coupled to the first terminal unit 230. For example, as shown in FIG. 5B, the voltage sensing unit 237a may be coupled by penetrating through the outer cylinder unit 232 and the connecting unit 233, where the voltage sensing unit 237a may be electrically connected to the first terminal unit 230. To be electrically connected to the voltage sensing unit 237a, a cell voltage sensing connector unit 237b may be formed at the outer cylinder unit 232 to a desired depth.

As shown in FIG. 5B, the temperature sensing unit 238a may be coupled to a battery by penetrating through the outer cylinder unit 232 and the connecting unit 233 of the first terminal unit 230, where the temperature sensing unit 238a may be a thermistor and detects a temperature inside the battery. To be electrically connected to the temperature sensing unit 238a, a cell voltage sensing connector unit 237b may be formed at the outer cylinder unit 232 to be exposed.

Accordingly, a voltage detected by the voltage sensing unit 237a and a temperature detected by the temperature sensing unit 238a may be transmitted to a battery managing system or a battery monitoring system (BMS), and thus overcharging, over-discharging, and temperature state of a battery may be efficiently managed. In some examples of the present invention, the voltage sensing unit 237a and the cell voltage sensing connector unit 237b or ambient areas may be formed to have different shapes to prevent incorrect insertion of the connectors.

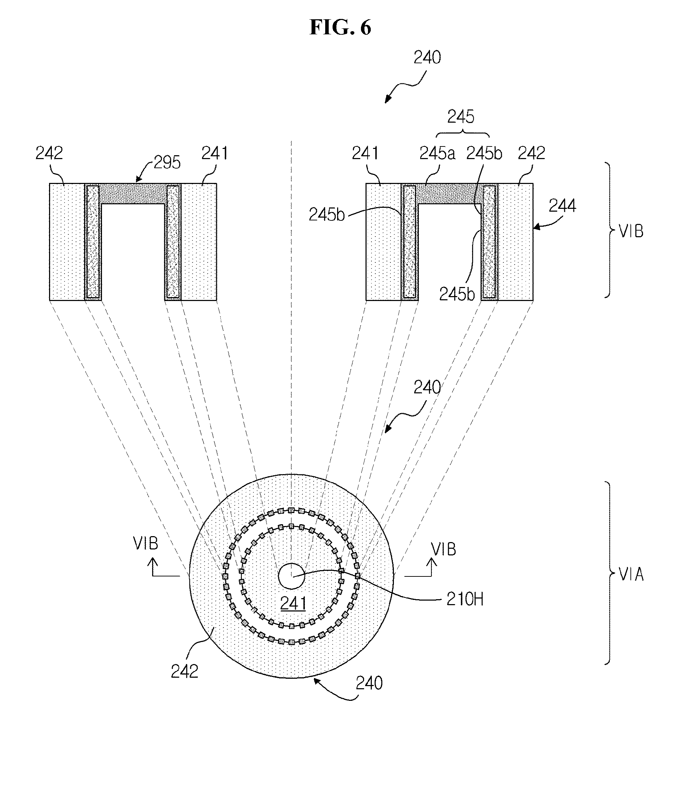

FIG. 6 is a diagram showing a plan view VIA of a second terminal unit provided at the other side of a battery including a roll structure and a magnified sectional view VIB thereof obtained along a line VIB-VIB' according to an embodiment of the present invention.

Referring to FIG. 6, the second terminal unit 240 may include a second cover 244 and a second terminal 245. The second terminal 245 may be electrically connected to the second lead 150. The second cover 244 may be an insulator, whereas the second terminal 245 may be a conductor. The second terminal unit 240 may be an external terminal for a positive electrode or a negative electrode. Preferably, if the first terminal unit 230 as described above with reference to FIG. 5 is an external terminal for a positive electrode, the second terminal unit 240 may be an external terminal for a negative electrode, or vice versa.

The second cover 244 includes an inner cylinder unit 241 connected to the roll core 210 or extending from the roll core 210, an outer cylinder unit 242 connected to the case 220 or extending from the case 220, and a connecting unit (not shown) interconnecting the inner cylinder unit 241 and the outer cylinder unit 242.

The second terminal 245 is formed to have an approximately n-like shape including one inner wall 245a and two sidewalls 245b, where a second common lead unit 150B may be electrically connected to the inner wall 245a. Furthermore, the two sidewalls 245b may closely contact inner walls of the inner cylinder unit 241 and the outer cylinder unit 242 constituting the second cover 244. Therefore, the second terminal 245 may have an overall concave groove-like shape.

In other example of the present invention, the two sidewalls 245b of the second terminal 245 may be formed as bent wires with a linear pattern, a diagonal line pattern, a spiral pattern, or a curve line pattern for highly efficient flow of charging/discharging currents, and thus the sidewalls 245b may function as springs. Furthermore, embossings, protrusions, or other equivalent structures may be formed at the sidewalls 245b.

If the second terminal 245 is an external terminal for a negative electrode, the second terminal 245 may contain copper, nickel, titanium, a stainless steel, gold, tantalum, niobium, hafnium, zirconium, vanadium, indium, cobalt, tungsten, tin, beryllium, molybdenum, or an alloy thereof. Preferably, the second terminal 245 may contain copper or a copper alloy.

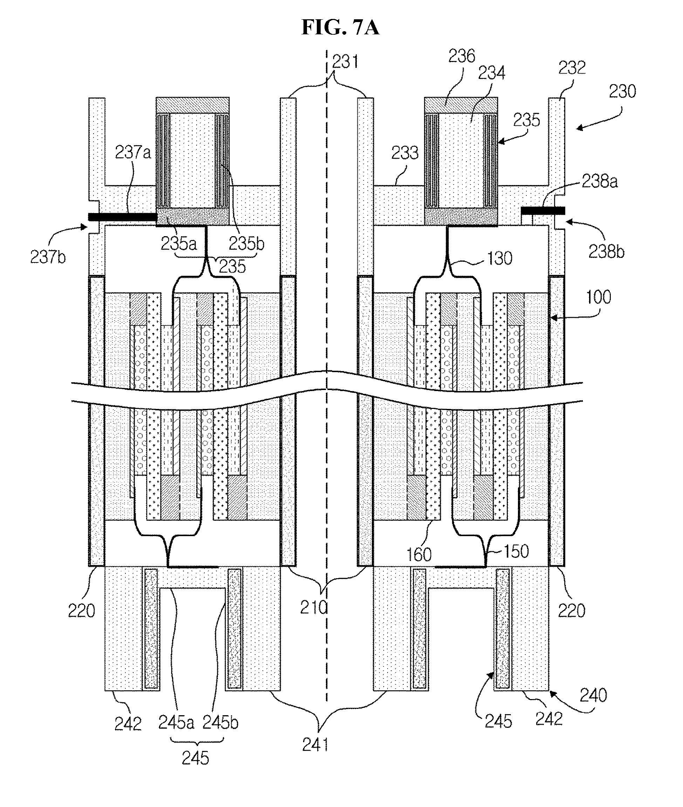

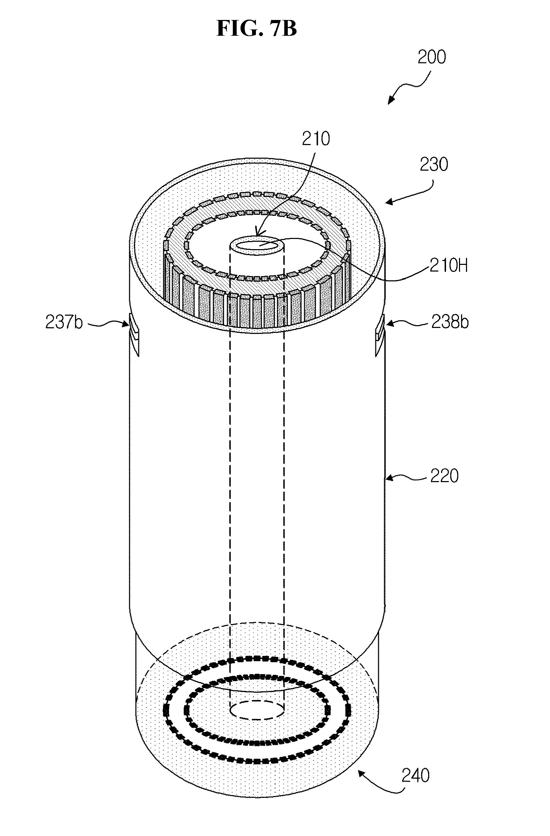

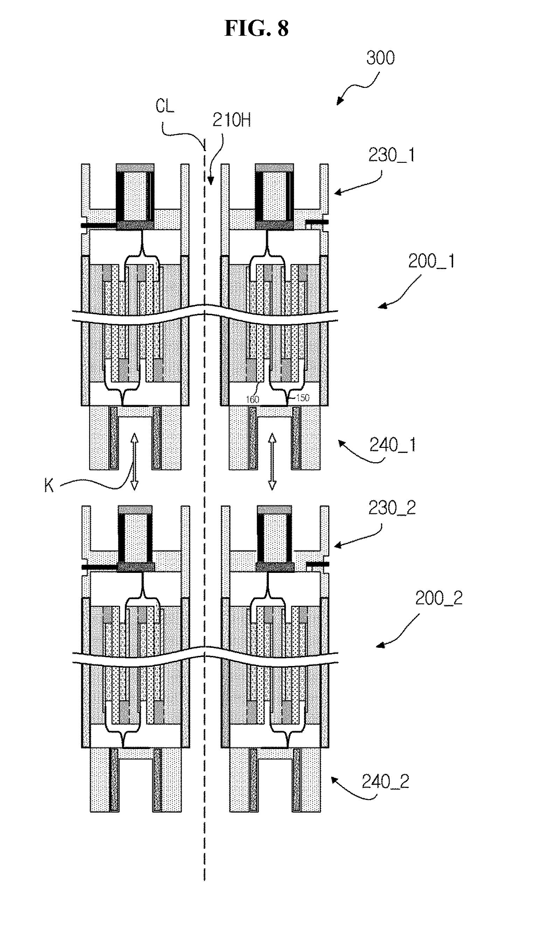

FIG. 7A is a sectional view of a battery 200 according to an embodiment of the present invention, FIG. 7B is a perspective view of the battery 200, and FIG. 8 is a sectional view showing a configuration in which a plurality of batteries 200_1 and 200_2 are connected in series.

Referring to FIGS. 7A and 7B, the battery 200 includes the electrode assembly 100, the roll core 210 around which the electrode assembly 100 is wound, the case 220 to which the electrode assembly 100 and the roll core 210 are coupled, the first terminal unit 230 assembled to first end portions of the roll core 210 and the case 220 and electrically connected to the first electrode 120 of the electrode assembly 100 via the first common lead unit 130A, and the second terminal unit 240 assembled to second end portions of the roll core 210 and the case 220 and electrically connected to the second electrode 140 of the electrode assembly 100 via the second lead 150B.

In an example of the present invention, the first terminal unit 230 and the second terminal unit 240 are formed to have the shape of respective terminal unit as shown in FIG. 6 and 7, and thus the second terminal unit 240 of the battery 200 may be easily coupled to or decoupled from the first terminal unit 230 of another battery 200. Referring to FIG. 8, to connect the plurality of batteries 200_1 and 200_2 in series, as indicated by the arrow K, the outer cylinder unit of a second terminal unit 240_1 of the first battery 200_1 may be inserted into and coupled to the outer cylinder unit of the first terminal unit 230 of the second battery 200_2. Similarly, a second terminal unit of another battery may also be inserted into and coupled to the first terminal unit 230_1 of the first battery 200_1, and a first terminal unit of another battery may be inserted into and coupled to the second terminal unit 240_2 of the second battery 200_2, thereby establishing a serial connection between batteries.

The protrusion 234 of the first terminal unit 230 is coupled to a concave groove formed at the second terminal unit 240. As a result, as the first terminal 235 and the second terminal 245 contact each other, the first terminal 235 and the second terminal 245 may be electrically connected to each other without a separate bus structure. If necessary, the first terminal 235 and the second terminal 245 are formed to function as springs, mechanical strengths thereof and ease of coupling therebetween may be improved.

In an example of the present invention, the roll core 210 and/or the inner cylinder units 231 and 241 of the first and second terminals 235 and 245 are connected to one another and may have pipe-like shapes. As a result, a flow channel 210H in which an air-cooling coolant or a liquid-cooling coolant may flow for cooling a battery may be provided. Therefore, heat accumulated at the centers of batteries 200 and 300 may be efficiently dissipated, thermal equilibrium of the batteries 200 and 300 may be maintained, and thus heat-resistance of the batteries 200 and 300 may be improved. Furthermore, even if a plurality of batteries are connected in series, as shown in FIG. 8, the continuous flow channel 210H may be provided along the center line CL.

Furthermore, when the plurality of batteries 200 are connected in series or in parallel and constitute a module or a pack, such a structure may function as a center supporting unit or a center supporting structure even though there is no center pin, and may enhance mechanical strength of the module or the pack.

An region of the roll core 210 and an region of the case 220 that are exposed out of the batteries 200 and 300 may be insulated. If the roll core 210 and the case 220 are formed as conductors, insulating coating layers may be formed at the region of the roll core 210 and the region of the case 220 exposed to outside. However, if the roll core 210 and the case 220 are formed as insulators, such insulating coating layers may be omitted. Accordingly, the batteries 200 and 300 according to the present invention may exhibit reliable electric insulation from an external device or an external system and may prevent an electric short-circuit, and thus it becomes easy to design circuits for an external device or an external system.

In an example of the present invention, an electrolyte may be injected into a space surrounded by the roll core 210, the case 220, the first terminal unit 230, and the second terminal unit 240, e.g., a space of a roll structure in which the electrode assembly 100 is arranged. For example, an aqueous electrolyte including a salt, such as potassium hydroxide (KOH), potassium bromide (KBr), potassium chloride (KCI), zinc chloride (ZnCl2), and sulfuric acid (H₂SO₄), may be absorbed into a roll structure, thereby activating the batteries 200 and 300. Furthermore, a non-aqueous electrolyte formed by mixing a mixed solvent containing a highly-dielectric carbonate solvent, such as propylene carbonate or ethylene carbonate, and a low viscosity carbonate solvent, such as diethyl carbonate, methyl ethyl carbonate, or a dimethyl carbonate, with a lithium electrolyte, such as LiBF₄ and LiPF₆, may also be absorbed into a roll structure, thereby activating the batteries 200 and 300. Although not shown, a suitable battery managing system for controlling stability during operation of the batteries 200 and 300 and/or power supply characteristics may be further coupled to the batteries.

Fabrication of the batteries 200 and 300 may be performed by formation of the electrode assembly 100, winding of the electrode assembly 100, coupling of the electrode assembly 100, coupling of the first terminal unit 230, injection of an electrolyte, and coupling of the second terminal unit 240. In the formation of the electrode assembly 100, the electrode assembly 100 including the electric insulation layer 110, which includes the first main surface 111 and the second main surface 112 opposite to the first main surface 111; the first electrode 120 formed on the first main surface 111 of the electric insulation layer 110; the first lead 130 electrically connected to the first electrode 120 and extending out of the electric insulation layer 110; the second electrode 140 formed on the second main surface 112 of the electric insulation layer 110; the second lead 150 electrically connected to the second electrode 140 and extending out of the electric insulation layer 110 in a direction opposite to the extending direction of the first lead 130; and the separator 160 closely contacting at least one of the first electrode 120 and the second electrode 140 may be provided. During the winding of the electrode assembly 100, the electrode assembly 100 may be wound around the roll core 210 as a winding axis, such that the first electrode 120 and the second electrode 140 face each other via the separator 160 and form an electrochemical reacting area.

In the coupling of the electrode assembly 100, the electrode assembly 100 wound around the roll core 210 is coupled to the case 220. In the coupling of the first terminal unit 230, the first terminal unit 230 (or the second terminal unit) may be assembled to first end portions of the roll core 210 and the case 220 and, at the same time, the electrode assembly 100 may be electrically connected to the first terminal unit 230. In the injection of the electrolyte, the electrolyte may be injected into a space defined by the roll core 210, the case 220, and the first terminal unit 230, that is, the internal space in which the electrode assembly 100 is arranged.

In the coupling of the second terminal unit 240, the second terminal unit 240 (or the first terminal unit) is assembled to the other end portions of the roll core 210 and the case 220 and, at the same time, the electrode assembly 100 is electrically connected to the second terminal unit 240. The injection of the electrolyte may be performed by injecting the electrolyte via an injection hole separately arranged at the case 220, the first terminal unit 230, or the second terminal unit 240, after the coupling of the first and second terminal units 230 and 240. In an example of the present invention, if the separator 160 includes an electrolyte, the injection of the electrolyte may be omitted.

Since a battery according to an embodiment of the present invention exhibits improved energy density and workability, the battery according to an embodiment of the present invention may be applied as a small battery for a small electronic device, such as a computer, a display apparatus, and a mobile phone, or may be applied as a mid-sized or large-sized battery as a power supply for an automobile or power storage by enhancing capacity of the battery through increase of volume of the battery. The above embodiments may replace or be combined with one another unless being contradictory to one another. For example, the roll structure of FIG. 1 and the roll structure including sub-electrode assemblies of FIG. 4 may be interchangeably implemented. Here, one sub-electrode assembly or three or more sub-electrode assemblies may be arranged. In this case, electrode assemblies may be repeatedly stacked, and the sub-electrode assemblies may be arranged at one or both sides of the stacked electrode assembly.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An electrode assembly comprising:
an electric insulation layer comprising a base unit having a first main surface and a second main surface opposite to the first main surface;
a first electrode formed on the first main surface of the electric insulation layer;
a first lead electrically connected to the first electrode and extending out of the electric insulation layer;
a second electrode formed on the second main surface of the electric insulation layer and having different polarity from that of the first electrode;
a second lead electrically connected to the second electrode and extending in a direction opposite from the extending direction of the first lead; and
a separator arranged on at least one of the first electrode and the second electrode,
wherein the electric insulation layer comprises a first anti-leakage unit formed along at least a portion of edges of the first main surface of the base unit and a second anti-leakage unit formed along at least a portion of edges of the second main surface of the base unit, and
wherein the electric insulation layer is wound at least once around a winding axis parallel to the extending directions of the first lead and the second lead.

2. The electrode assembly of claim 1, wherein the first anti-leakage unit surrounds at least one of the edges of the base unit, the at least one of the edges being perpendicular to the extending direction of the second lead of the winding axis, and
wherein the second anti-leakage unit surrounds at least one of the edges of the base unit, the at least edges perpendicular to the extending direction of the first lead of the winding axis.

3. The electrode assembly of claim 2, wherein the first anti-leakage unit is formed to surround edges other than the edge on which the first lead is arranged,
wherein the first electrode and the first lead are accommodated inside the first anti-leakage unit,
wherein the second anti-leakage unit is formed to surround edges other than the edge on which the second lead is arranged, and
wherein the second electrode and the second lead are accommodated inside the second anti-leakage unit.

4. The electrode assembly of claim 1, wherein the first electrode comprises:
a first current collecting layer formed on the first main surface; and
a first active material layer formed on the first current collecting layer.

5. The electrode assembly of claim 4, wherein the first lead is directly electrically connected to the first current collecting layer.

6. The electrode assembly of claim 4, wherein the first lead is integrated with the first current collecting layer.

7. The electrode assembly of claim 1, wherein the second electrode comprises:
a second current collecting layer formed on the second main surface; and
a second active material layer formed on the second current collecting layer.

8. The electrode assembly of claim 7, wherein the second lead is directly electrically connected to the second current collecting layer.

9. The electrode assembly of claim 7, wherein the second lead is integrated with the second current collecting layer.

10. The electrode assembly of claim 1, wherein the electrode assembly is wound together with a sub-electrode assembly comprising an electric insulation layer comprising a base unit; a third electrode formed on a main surface of the electric insulation layer, faces either the first electrode or the second electrode of the electrode assembly, and has an polarity opposite to that of the electrode facing with the third electrode; and a third lead electrically connected to the third electrode and extending and protruding out of the electric insulation layer, and an additional separator interposed between the sub-electrode assembly and the corresponding electrode of the electrode assembly.

11. The electrode assembly of claim 10, wherein the sub-electrode assembly comprises an anti-leakage unit formed along at least a portion of edges of a main surface of the electric insulation layer of the sub-electrode assembly.

12. The electrode assembly of claim 1, wherein at least one of the first leads and the second leads successively exposed at both end portions of the roll structure provides a multi layered structure of lead, and a common lead unit is provided by physically contacting and electrically connecting the multi layered structure one another.

13. The electrode assembly of claim 1, wherein the innermost electrode selected from the first electrode and the second electrode is arranged farther apart from the winding axis than the other electrode.

14. The electrode assembly of claim 1, wherein the electric insulation layer contains a natural or synthetic flexible resin-based material.

15. A battery comprising:
the electrode assembly of any of claims 1 through 14;
a roll core arranged at an end portion of the electric insulation layer in a direction parallel to the winding axis; and
a case for accommodating the electrode assembly and the roll core.

16. The battery of claim 15, wherein the roll core has a hollow cylindrical or quadrilateral pipe-like shape.

17. The battery of claim 15, wherein the roll core has a hollow cylindrical or quadrilateral pipe-like shape.

18. The battery of claim 17, wherein the interior of the roll core provides a cooling channel for cooling the battery.

19. The battery of claim 15, wherein insulating coating layers are formed on surfaces of the roll core and the case, the surfaces not contacting the electrode assembly.

20. The battery of claim 15, further comprising a first terminal unit arranged at first end portions of the roll core and the case and electrically connected to the first lead.

21. The battery of claim 20, wherein the first terminal unit comprises:
a first cover covering the roll core and the case;
a protrusion extending outward from the first cover; and
a first terminal coupled to the first cover and the protrusion and electrically connected to the first lead.

22. The battery of claim 15, further comprising a second terminal unit arranged at second end portions of the roll core and the case and electrically connected to the second lead.

23. The battery of claim 22, wherein the second terminal unit comprises:
a second cover covering the roll core and the case; and
a second terminal coupled to the second cover and the protrusion and electrically connected to the second lead.

24. The battery of claim 15, further comprising:
a first terminal unit arranged at first end portions of the roll core and the case and electrically connected to the first lead; and
a second terminal unit arranged at second end portions of the roll core and the case and electrically connected to the second lead,
wherein the first terminal unit and the second terminal unit have concave grooves for coupling the first terminal unit and the second terminal unit to each other and decoupling the first terminal unit and the second terminal unit from each other.

25. The battery of claim 24, wherein a voltage sensing unit is coupled to at least one of the first and second terminal units.

26. The battery of claim 24, wherein a temperature sensing unit is coupled to at least one of the first and second terminal units.

27. A method of manufacturing a battery, the method comprising:
forming an electrode assembly comprising:
an electric insulation layer comprising a base unit having a first main surface and a second main surface opposite to the first main surface;
a first electrode formed on the first main surface of the electric insulation layer;
a first lead electrically connected to the first electrode and extending out of the electric insulation layer;
a second electrode formed on the second main surface of the electric insulation layer and having different polarity from that of the first electrode;
a second lead electrically connected to the second electrode and extending in a direction opposite from the extending direction of the first lead; and
a separator arranged on at least one of the first electrode and the second electrode;
winding the electrode assembly around a roll core as a winding axis to have a roll structure, such that the first electrode and the second electrode face each other via the separator and form an electrochemical reacting area; and
coupling the electrode assembly wound around the roll core to a case.

28. The method of claim 27, wherein the electric insulation layer comprises a first anti-leakage unit formed along at least a portion of edges of the first main surface of the base unit and a second anti-leakage unit formed along at least a portion of edges of the second main surface of the base unit.

29. The method of claim 27, wherein further comprising physically contacting and electrically connecting a plurality of lead layers provided by at least one of the first lead and the second lead successively exposed at both end portions of the roll structure.
